# EUROPÄISCHE PATENTANMELDUNG

(11) **EP 1 375 959 A2**
(43) Veröffentlichungstag der Anmeldung: **02.01.2004**
(21) Anmeldenummer: 03010740.3
(22) Anmeldetag: 14.05.2003
(51) Int. Cl.: F16G 11/12

(54) **Schnellspanneinrichtung für Seilzugschalter**

(30) Priorität: 26.06.2002 DE 20209881 U
(71) Anmelder: Bernstein AG, 32457 Porta Westfalica (DE)
(72) Erfinder: Wecke, Rolf, Dipl.-Ing., 31675 Bückeburg (DE); Gerner, Meinhard, Dipl.-Des., 32423 Minden (DE); Ulfik, Joachim, Dipl.-Ing., 32602 Vlotho (DE); Finger, Markus, 32423 Minden (DE)
(74) Vertreter: Dantz, Jan Henning

(57) **Zusammenfassung**

Eine Schnellspanneinrichtung (1) für Seilzugschalter umfasst ein Halteelement (2), an dem ein Seil (3) klemmend festlegbar ist, und ein Gehäuse (8), das mit dem Halteelement (2) verbunden ist. Erfindungsgemäß sind zwischen Gehäuse (8) und Halteelement (2) Mittel (9, 10) zur Feinjustierung vorgesehen. Insbesondere kann eine Mutter (10) zur Feinjustierung eingesetzt werden, so dass die Seilspannung stufenlos verstellbar ist, wobei sowohl die Möglichkeit einer Grobeinstellung als auch einer Feinjustierung möglich ist.

## Beschreibung

Die vorliegende Erfindung betrifft eine Schnellspanneinrichtung für Seilzugschalter, mit einem Halteelement, an dem ein Seil klemmend festlegbar ist, und einem Gehäuse, das mit dem Halteelement verbunden ist.

Es gibt Schnellspanneinrichtungen für Seilzugschalter, bei denen das Seil zwischen zwei Klemmbacken festlegbar ist, wobei eine Bewegung des Seiles in eine Richtung durch die Klemmbacken ermöglicht wird. Eine solche Schnellspanneinrichtung ist in der Montage relativ komfortabel, da das Seil in die gewünschte Position gezogen und fixiert wird. Allerdings besteht der Nachteil, dass nach einem Einstellen des Seils eine Feinjustierung nicht vorgesehen ist. Die Schnellspanneinrichtungen werden meist in Verbindung mit Seilzugschaltern verwendet, die in unterschiedlichen Umgebungen verwendet werden, so dass durch thermischen Einfluss eine Seilverlängerung oder -verkürzung stattfinden kann. Wenn durch die Schnellspanneinrichtung auch eine solche Änderung der Seillänge nicht einstellbar ist, kann es passieren, dass der Seilzugschalter zu früh oder zu spät auslöst, was eine erhebliche Gefährdung mit sich bringen kann.

Es ist daher Aufgabe der vorliegenden Erfindung, eine Schnellspanneinrichtung für Seilzugschalter zu schaffen, die sowohl eine gröbere Einstellung als auch eine Feinjustierung ermöglicht.

Diese Aufgabe wird mit einer Schnellspanneinrichtung mit den Merkmalen des Anspruches 1 gelöst.

Wenn die Schnellspanneinrichtung zwischen Gehäuse und Halteelement Mittel zur Feinjustierung aufweist, kann das Seil zunächst klemmend an dem Halteelement festgelegt werden, wodurch eine grobe Einstellung vorgenommen werden kann. Sollte sich die Seillänge durch thermische Ausdehnung oder Verkürzung oder aufgrund von Dehnungserscheinungen ändern, kann eine Feinjustierung vorgenommen werden, damit die Auslösung des Seilzugschalters immer am gewünschten Punkt stattfindet.

Gemäß einer bevorzugten Ausführungsform der Erfindung ist zwischen Gehäuse und Halteelement ein Gewindeschaft vorgesehen, wobei der Abstand zwischen Gehäuse und Halteelement über eine Mutter verstellbar ist. Dadurch kann eine stufenlose Verstellung der Seilspannung vorgenommen werden, wobei die Mutter vorzugsweise als Rändelmutter ausgebildet ist, damit die Feinjustierung ohne Werkzeug erfolgen kann.

Vorzugsweise ist in dem Gehäuse eine Einrichtung zur Erfassung der Seilspannung vorgesehen. Da für die Betätigung eines Schalters meist eine gewisse Kraft überwunden werden muss, sollte das Seil anfänglich ebenfalls eine gewisse Spannung aufweisen, um eine sichere Auslösung zu gewährleisten. Vorteilhaft ist an dem Gehäuse dabei eine Anzeige für die Seilspannung vorgesehen, so dass die Feinjustierung ohne ein zusätzliches Messen der Seilspannung erfolgen kann, da diese über die Anzeige sichtbar gemacht ist. Dies ist eine erhebliche Vereinfachung, da auch kleine Längenänderungen des Seiles erkannt werden können.

Für eine sichere Festlegung des Seiles weist das Halteelement eine Platte auf, damit das Seil zwischen der Platte und einem Korpus festklemmbar ist. Vorzugsweise ist das Seil dabei zwischen Platte und Korpus umgelenkt, so dass besonders große Reibkräfte durch die Klemmung entstehen und auch große Kräfte durch die Schnellspanneinrichtung aufgenommen werden können.

Die Erfindung wird nachfolgend anhand eines Ausführungsbeispieles mit Bezug auf die beigefügten Zeichnungen näher erläutert. Es zeigen:

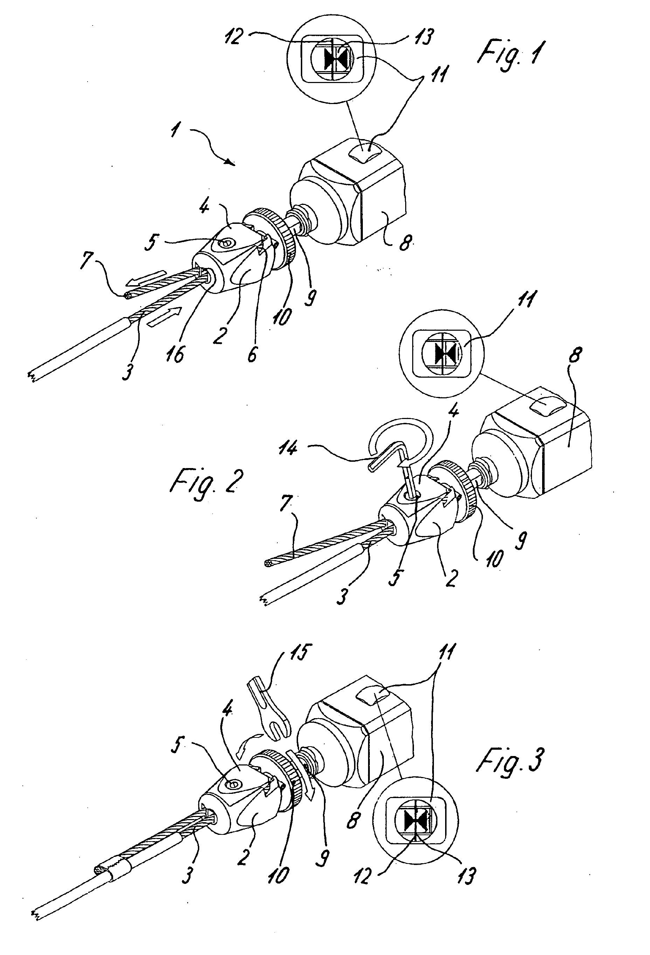

- Fig. 1: eine perspektivische Ansicht eines Ausführungsbeispiels einer Schnellspanneinrichtung;
- Fig. 2: eine perspektivische Ansicht der Schnellspanneinrichtung bei der Großjustierung, und
- Fig. 3: eine perspektivische Ansicht der Schnellspanneinrichtung bei der Feinjustierung.

Eine Schnellspanneinrichtung 1 umfasst ein Halteelement 2 zum Fixieren eines Seiles 3. Das Halteelement 2 ist hierfür mit einer Platte 4 versehen, so dass das Seil 3 zwischen der Platte 4 und einem Korpus des Halteelementes 2 über eine Schraube 5 festklemmbar ist. Das Seil 3 ist dabei durch eine mittige Öffnung in dem Halteelement 2 geführt und im Bereich des Halteelementes 2 mit einer Umlenkung 6 versehen, so dass das Seil 3 mit einem Endabschnitt 7 an einer Vorderseite des Halteelementes 2 wiederaustritt.

Die Schnellspanneinrichtung 1 weist ferner ein Gehäuse 8 auf, das über einen Gewindeschaft 9 mit dem Halteelement 2 verbunden ist. Auf dem Gewindeschaft 9 ist eine Rändelmutter 10 montiert, über die der Abstand zwischen Halteelement 2 und Gehäuse 8 veränderbar ist.

In dem Gehäuse 8 ist eine Einrichtung zur Erfassung der Seilspannung, beispielsweise ein Federelement, mittels dem die Vorspannung an dem Gewindeschaft 9 erfassbar ist.

Ferner ist an dem Gehäuse eine Anzeige 11 für die Seilspannung vorgesehen. An der Anzeige 11 ist eine feststehende Markierung 12 in einem Sichtfenster angeordnet, hinter der eine Skala 13 abhängig von der Seilspannung bewegbar ist. In dem Ausführungsbeispiel ist die gewünschte Seilspannung mit einem mittigen Strich 13 dargestellt, so dass Abweichungen zwischen der Markierung 12 und dem Strich 13 leicht zu erkennen sind.

Zur Festlegung eines Seiles an der Schnellspanneinrichtung 1 wird das Seil 3 zunächst durch das Halteelement 2 gezogen und an dem Halteelement 2 festgelegt. Hierfür wird die Platte 4 über einen Inbusschlüssel 14 festgezogen, wobei das Seil 3 grob in die gewünschte Position gebracht wird.

Wie in Fig. 3 gezeigt ist, kann anschließend eine Feinjustierung erfolgen. Das an dem Halteelement 2 festgelegte Seil 3 wird dann über eine Drehung der Rändelschraube oder aber, falls größere Kräfte aufgewendet werden müssen, über einen Schraubschlüssel 15, der an dem Gewindeschaft 9 angesetzt wird, relativ zu dem Gehäuse 8 bewegt. Dadurch verändert sich die Seilspannung, was an der Anzeige 11 des Gehäuses 8 sichtbar wird. Sobald die Markierung 12 und der Strich 13 übereinstimmen, hat das Seil 3 die gewünschte Spannung. Sollte sich aufgrund thermischer Ausdehnung die Seillänge verändern, kann mühelos durch eine Feinjustierung mittels der Rändelmutter 10 ein Nachspannen erfolgen.

## Patentansprüche

1. Schnellspanneinrichtung (1) für Seilzugschalter, mit einem Halteelement (2), an dem ein Seil (3) klemmend festlegbar ist, und einem Gehäuse (8), das mit dem Halteelement (2) verbunden ist, **dadurch gekennzeichnet, dass** zwischen Gehäuse (8) und Halteelement (2) Mittel (9, 10) zur Feinjustierung vorgesehen sind.

2. Schnellspanneinrichtung nach Anspruch 1, **dadurch gekennzeichnet, dass** zwischen Gehäuse (8) und Halteelement (2) ein Gewindeschaft vorgesehen ist und der Abstand zwischen Gehäuse (8) und Halteelement (2) über eine Mutter (10) verstellbar ist.

3. Schnellspanneinrichtung nach Anspruch 2, **dadurch gekennzeichnet, dass** die Mutter (10) als Rändelmutter ausgebildet ist.

4. Schnellspanneinrichtung nach einem der Ansprüche 1 bis 3, **dadurch gekennzeichnet, dass** in dem Gehäuse (8) eine Einrichtung zur Erfassung der Seilspannung vorgesehen ist.

5. Schnellspanneinrichtung nach einem der Ansprüche 1 bis 4, **dadurch gekennzeichnet, dass** an dem Gehäuse (8) eine Anzeige (11) für die Seilspannung vorgesehen ist.

6. Schnellspanneinrichtung nach einem der Ansprüche 1 bis 5, **dadurch gekennzeichnet, dass** das Halteelement (2) eine Platte (4) aufweist und das Seil (3) zwischen Platte (4) und einem Korpus festklemmbar ist.

7. Schnellspanneinrichtung nach Anspruch 6, **dadurch gekennzeichnet, dass** das Seil (3) zwischen Platte (4) und dem Korpus umgelenkt ist.
